# EUROPEAN PATENT APPLICATION

(11) **EP 2 186 397 A1**
(43) Date of publication of application: **19.05.2010**
(21) Application number: 09174985.3
(22) Date of filing: 04.11.2009
(51) Int. Cl.: A01K 1/03, A01K 31/08

(54) **Box for bird-fancying and/or rabbit breeding and related fittings**

(30) Priority: 06.11.2008 IT PI20080116
(71) Applicant: Donatini, Davide, 55015 Montecarlo (LU) (IT)
(72) Inventor: Donatini, Davide, 55015 Montecarlo (LU) (IT)
(74) Representative: Gritschneder, Martin

(57) **Abstract**

A box (10) for bird-fancying and/or rabbit breeding, having a parallelepiped shape with a rectangular base, provided with lifting legs in correspondence to the sides, is formed by a series of substantially two-dimensional structural elements (20,30,40,50,60), which constitute the parallelepiped faces. The various structural elements are assembled together in a detachable manner to obtain a box, that has extremely reduced dimensions during transport, due to its complete dismantability and a very stable structure in use condition. A nursery box can feature associated to the box, which nursery box can be stacked with other nursery boxes during transport, due to its innovative shape, allowing considerable saving in terms of space.

## Description

### TECHNICAL FIELD

The present invention is related to a box for bird-fancying and/or rabbit breeding.

In particular, the invention is related to a box for bird-fancying and/or rabbit breeding in private or domestic environments and to the related nursery box.

### STATE OF THE ART

As it is known, the boxes for bird-fancying and/or rabbit breeding for domestic use are containers of substantially parallelepipedal shape, equipped with support legs at four apexes of the base rectangle.

Basically, this container is formed by a frame of zinc-coated metal plate sections, situated along the edges of the parallelepiped, while the faces are formed predominantly by metallic grids.

In particular, two sides can be identified, one of which is provided with an opening and which bears a nest usually anchored externally for housing the breeder; a front panel, usually with a door and openings for the feeder, the fodder holder, and/or the drinking trough; a back panel, an upper cover, a gridded bottom and a bedding for collecting droppings and other solid and liquid waste materials. The above mentioned constituent elements, except for external fittings, are welded together to form a single structure. In view of the domestic and private use environment, this box typology must be extremely inexpensive, yet it must ensure good wear resistance of the materials and the structure stability.

One of the main obstacles to the commercialization of these products is the transport cost, which normally affects excessively the product final price with respect to the production cost.

In fact, as it is easy to guess, the boxes of this type are very bulky and their transport requires big loading spaces to handle a small number of products.

From this point of view, solutions of dismountable or partially dismountable boxes have been sought, aimed at reducing considerably the space occupied by the boxes during transport.

A box, partially dismountable according to the known technique, includes a frame welded to angle irons of suitable length, anchorable to said frame by screw means, to form the support legs.

Obviously, the above mentioned solution reduces the volumes during transport, but only minimally, since, after having eliminated the legs, the box structure still consists of one, very bulky piece.

A much more efficient solution from the point of view of volume reduction during transport is described in FR 885 021 A, that provides a structure basically consisting of four uprights, to which the panels or grids are fastened by screw means, to constitute the two lateral walls, the front wall and the upper wall. Obviously, a bottom and a top may be added to complete the box. During transport, the box consists of substantially two-dimensional elements, the walls, and of substantially monodimensional elements, the uprights, therefore the volumes are much reduced. However, the above mentioned solution inevitably presents a certain complexity while assembling, because each single upright must be fastened to at least two walls, and this implies considerable assembling time and high number of screws to ensure the structure stability.

Another solution, likewise valid from the point of view of volume occupied during transport, includes the box actual frame being dismountable, at least partially. In this solution, the sides, the fore panel and the back panel are mutually anchorable by screw means, while the upper cover is firmly connected to the back panel, even though pivoting. In this way, during transport, the single panels, separated one from another, or folded one on another, can be overlaying, thus reducing the box volumetric size to a minimum.

However, the above described solution presents considerable limits from the structural stability point of view, once the box is re-assembled. The disadvantage is caused mainly by the presence of elements connected to one another in a pivoting manner.

A further problem that occurs during the transport phase is the space occupied by the boxes housing the breeders. Actually, also these elements consist of boxes with walls substantially perpendicular to one another, usually with the exception of the upper inspection panel, that presents a slight inclination, and whose internal volume consequently remains empty and unused during the transport.

### SUMMARY OF THE INVENTION

The object of the present invention is to propose a box for bird-fancying and/or rabbit breeding in domestic environment, and related fittings, capable of overcoming the limits of the known technique, and in particular aimed at reducing drastically the transport costs, maintaining at the same time a high reliability and structural stability and very contained production costs.

A further object of the present invention is to propose a box for bird-fancying and/or rabbit breeding that allows extremely reduced transport costs and extremely simple assembling and disassembling operations, at very contained production costs.

The above mentioned objects have been achieved by a box for bird-fancying and/or rabbit breeding of substantially parallelepiped form, with rectangular base, comprising at least a right side and a left side, a back panel, a front panel and an upper cover, **characterized in that** each of said sides, panels and top constitutes a distinct two-dimensional structural element, fastened to the respective adjacent elements in a detachable manner.

Advantageously, the box includes also at least another substantially two-dimensional structural element, formed by a support frame of a bottom for carrying and walking animals kept in said box.

In the last case, the front panel includes a grid fitted in said sides at its longitudinal ends.

Still advantageously, the substantially two-dimensional structural elements are fastened to one another by screw means.

The same objects are obtained by means of a nursery box, aimed at being fitted externally in a side of a box for rabbit breeding, **characterized in that** it includes a container of substantially truncated cone shape, so that, in non-use conditions, more nursery boxes can be stacked one in another.

This nursery box is advantageously associated to a box for rabbit breeding according to the present invention.

The advantages related to the box of the invention and to the related nursery boxes are evident in relation to the very reduced dimensions they present during the transport, due to their complete dismantability or stackability, thus allowing a reduction of the product final price. Further considerable advantages derive from the great reliability and stability of the above mentioned box structure, as well as from the extremely simple assembling way.

### BRIEF DESCRIPTION OF THE DRAWINGS

These and other advantages related to the box for bird-fancying and/or rabbit breeding of the invention, will therefore become more easily comprehensible by the disclosure of preferred embodiments, non limiting, as described later on with the help of the enclosed drawings, in which:
- Figure 1 is a perspective view of a box according to the invention;
- Figure 2 is another perspective view of the box of Figure 1;
- Figure 3 is a side view of the box of Figure 1;
- Figure 4 is a side view of the nursery box seen in Figure 1, that can be associated to a box according to the invention;
- Figure 5 is a front view of the nursery box of Figure 4;
- Figure 6 is a perspective view, similar to the one of Figure 1, of a different embodiment of a box according to the invention.

### DESCRIPTION OF THE PREFERRED EMBODIMENTS

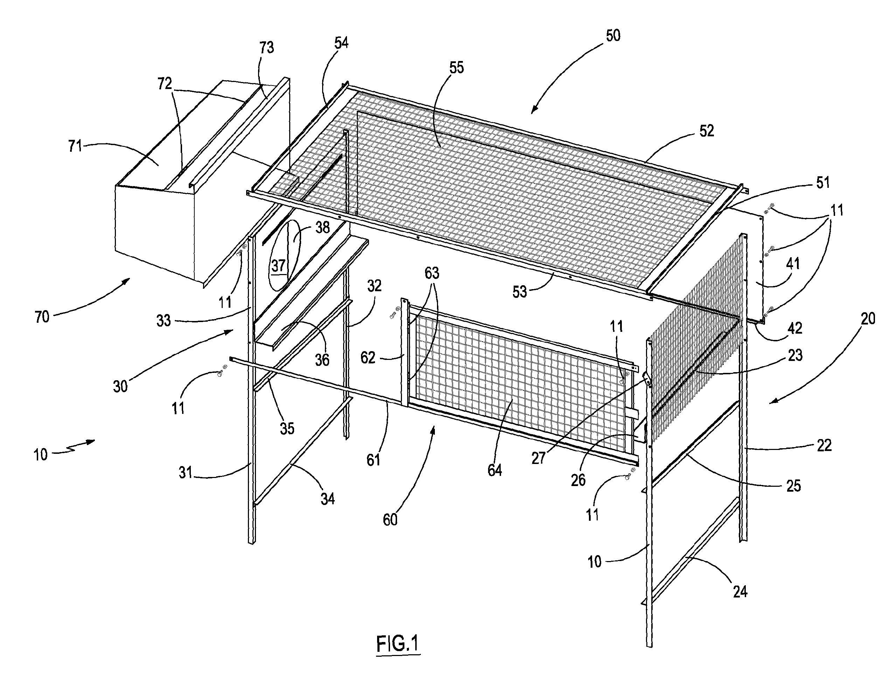

With reference to Figure 1, numeral 10 indicates a box for rabbit breeding in domestic environment, according to the invention as a whole. The box includes a right side 20, a left side 30, a back panel 40, an upper cover 50 and a front panel 60.

The right side includes two uprights 21 and 22, formed by angle irons of metal plate, as most of the elements forming the box frame, a rectangular mesh grid 23, a crossbar 24, aimed at increasing the structure stability, an inclined guide 25, aimed at supporting the waste collecting bedding, not shown, as it is known.

An "L"-shaped protrusion, present on the inner face of the side 20, forms a groove having the opening turned upwards, to which a support element 26 of the gridded bedding, likewise not shown, as it is known, is hook fitted, and consequently, can be removed by simply slipping it off.

The left side 30 is different from the right side in that a nursery box 70 is hooked on its outer face.

Therefore, the left face includes uprights 31 and 32, a lateral surface 33 of metal plate, having a circular hole 37, that can be closed by a sliding door 38, to allow or to prevent the access to the nursery box 70, a crossbar 34 and an inclined guide 35. Also the left side is provided with a support element 36 of the gridded bedding, internally hooked to a shaped protrusion.

The back panel 40 includes a metal plate 41, suitably perforated, and a lower section 42, supporting the gridded bedding.

The upper cover 50 is substantially formed of metal plate sections 51, 52, 53 and 54, that form the cover external frame, welded one to another, and a rectangular mesh grid 55.

The front panel 60 includes a horizontal section 61, that connects the two sides 20 and 30 and supports the gridded bedding, and an upright 62, welded in a central area of the horizontal section 61 and provided with a hole for being fastened to the element 53 of the upper cover 50.

Hinge means 63 are secured to the upright 62, for fastening thereto a door 64, that gives access to the box internal space and is usually kept in closed position by a hook 27, integral with the right side 20.

An opening is provided on the left portion of the panel 50, where additional elements, such as fodder holders, drinking troughs or others are located by hooking means provided on the frame.

The sides 20 and 30, the back panel 40, the upper cover 50 and the front panel 60 are connected one to another by simple screw means 11, which enter suitable holes provided in the various elements.

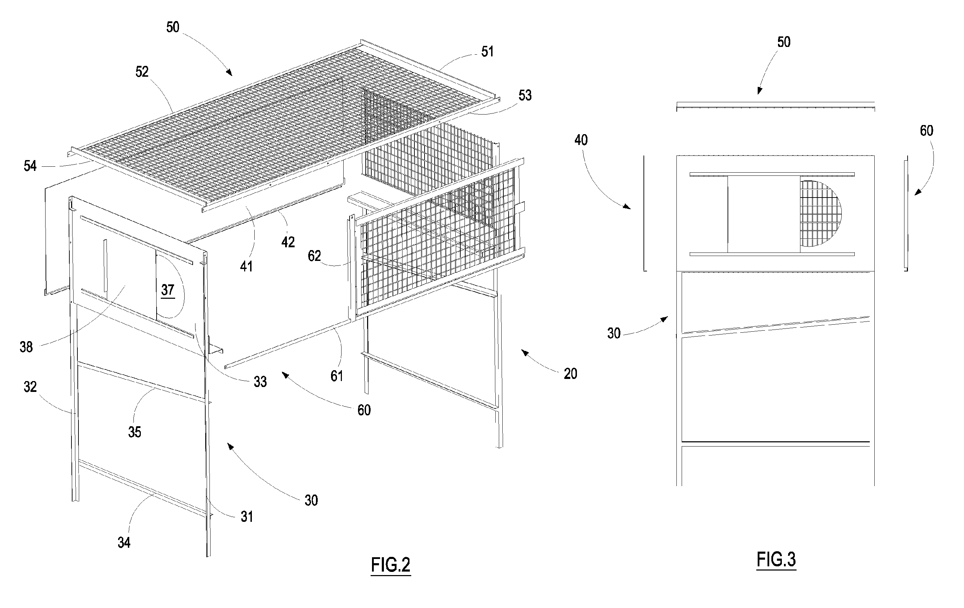

The box consists substantially only of the lateral walls and the upper cover, joined together by means of few screws, from a minimum of 9 to a maximum of 14, in case it is requested to ensure particular safety of the elements positioning. It is not necessary to provide bearing uprights which must be fastened to the single walls, therefore the assembling is extremely rapid with respect to the known technique. The lower gridded bedding rests simply on the horizontal support elements 26, 36 and 42 provided on the lateral walls and the droppings collecting bedding likewise rests and slides on the guides 25 and 35. All of these elements are two-dimensional, therefore minimum space is occupied for sure during the transport. Actually, as it is well seen in Figures 2 and 3, the box can be dismantled in substantially two-dimensional components, that are the lateral walls 20, 30, 40 and 60 and the upper cover 50, which, once dismantled, can be overlaid one over another together with the gridded bedding and the droppings collecting bedding, and can be packaged for transport in packs having less than 10 cm overall thickness.

Furthermore, since all the components are connected to one another by screw and joint means, the assembling results in an extremely stable structure with respect to dismantable boxes of the known technique, in which some elements are firmly fastened to one another, but in a pivoting manner.

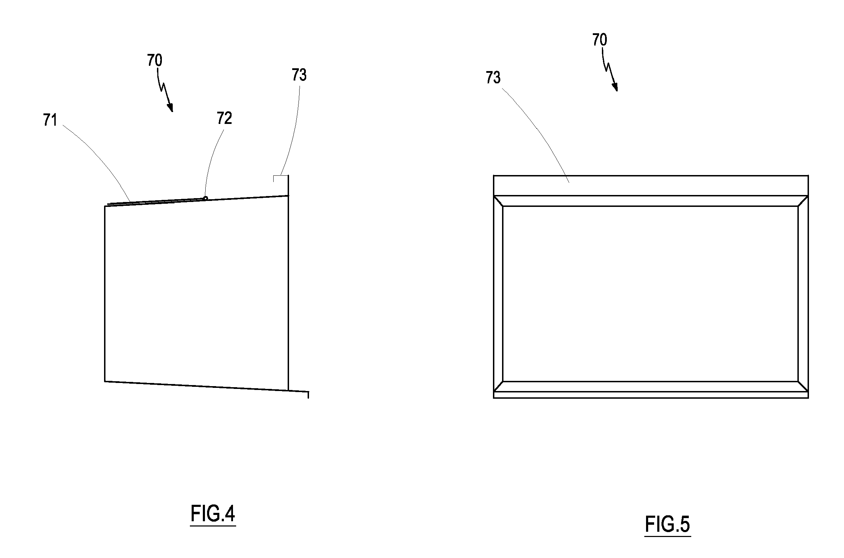

Moreover, the shape of the nursery box 70 is particularly important, as further seen in Figures 3 and 4, formed by a container of a substantially truncated cone shape, open at the side facing the box left side, and provided, at its upper part, with a door 71, rotatable on a hinge means 72, and of a hook-like element, aimed at engaging with suitable tongues protruding on the outer face of the left side.

The container substantially truncated cone shape, in which the four walls 74, 75, 76, 77, adjacent to the open face form with the base 78 an angle greater than 90°, is considerably advantageous with respect to the known technique, mainly during the boxes transport, since the same nursery boxes can be stacked by putting them one into another and thus allowing a much higher number of nursery boxes to be transported in the same available space. This is obviously impossible with the nursery boxes of known technique, whose walls are perpendicular to the base, usually with the exception of the upper wall, which is provided with a door, whose inclination facilitates water dripping and helps maintaining the door in the usual correct close configuration.

Obviously, the truncated cone shape with rectangular base described and shown in the enclosed figures is the one least different from the nursery boxes for rabbit hutch of the known technique, however very different forms can be also sought while remaining within the scope of the inventive idea providing nursery boxes which are stackable by putting them one into another, so as to limit the dimensions to a minimum during transport.

Obviously, also the box structure could differ from what has been described above.

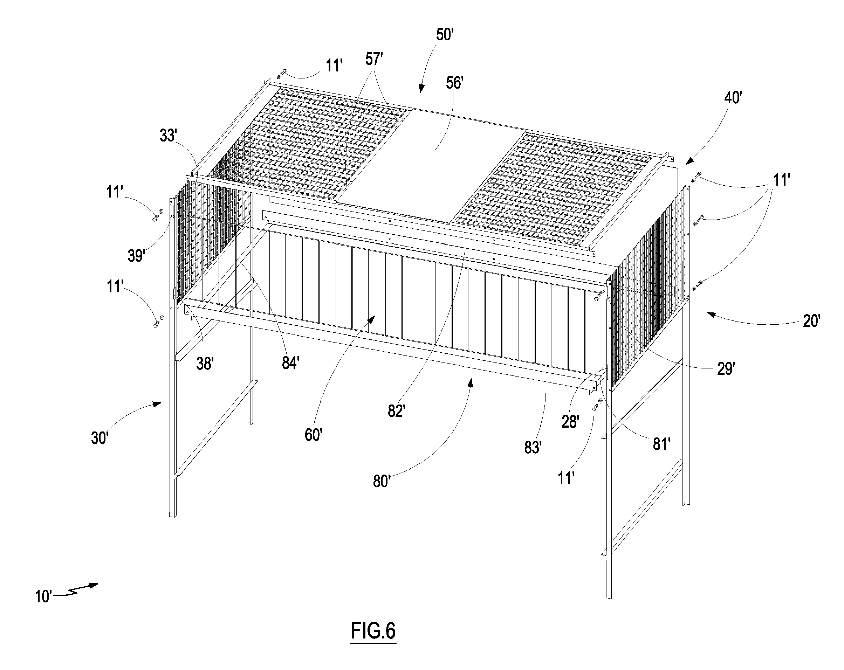

In particular, the embodiment of Figure 6 represents a box for bird-fancying 10', comprising a right side 20', a left side 30', a back panel 40', an upper cover 50', a front panel 60' and a support frame of the gridded bedding 80'.

The left side 30' presents a grid surface 33', like the right side, since for the boxes for bird-fancying nursery boxes are not required. The upper cover 50' is provided centrally with a door 56', fastened by a hinge means 57', to give access to the internal space of the box.

The front panel 60' is made of a large mesh grid which enters at bottom into openings 28' and 38' of the right side and left side, respectively, and at its upper part, into hook lugs 29 ' and 39' of the right side and left side, respectively.

The box 10' includes also a support frame of the gridded bedding 80' consisting of four angle irons 81', 82', 83', 84' welded to one another, in which the horizontal portion supports the gridded bedding, of the prior art, while the vertical portion is provided with suitable holes for mutual fastening of the various elements 20', 30', 40', 50', 80' by the screw means 11'.

The box for rabbit breeding 10 and the box for bird-fancying 10' differ from each other quite clearly, as far as some structural elements are concerned, but they share the inventive concept of the invention, because they are dismantable and consist only of substantially two-dimensional structural elements assembled to one another in a detachable manner, by screw means.

Certainly, many further variants and changes can be applied to the boxes according to the present invention and the above described structural elements without jeopardizing the advantages associated to the invention.

Each face of the parallelepiped, of which the box takes the shape, could be formed by more structural elements constrained one to another in a detachable manner and the single structural elements could even have very different shape from the described ones, yet remaining substantially two-dimensional. For instance, the single structural elements can be designed to allow connection or introduction of the various types of fittings normally used with this type of boxes, such as fodder holders, feeders, drinking troughs. In particular, a single box 10 can have, associated thereto, two nursery boxes 70, one on each side, and could also be provided with a separation wall, situated therein and aimed at separating it in two mirror boxes.

The constraint means 11, 11' could be joints or other rapid connection means for facilitating and speeding up the assembling operations. The number of constraint means can be certainly varied depending on the greater or smaller rigidity degree required by the structure.

These and other variants and changes of practical-application nature can be applied to the box for rabbit breeding and/or bird-fancying according to the invention, yet maintaining the above outlined advantages, and remaining within the protection scope provided by the following claims. In fact, the above description of the specific embodiments is useful for disclosing the base concept of the invention, so that those skilled in the field can carry it out modifying and adapting the above mentioned embodiments to the various applications; such adaptations and changes will be then considered equivalent to the illustrated embodiments. It is understood that the expressions or numeration used are intended as purely descriptive and helpful in the comprehension of the inventive concept and therefore not limiting.

## Claims

1. Box (10, 10') for bird-fancying and/or rabbit breeding substantially shaped as a parallelepiped with rectangular base, **characterized in that** it consists exclusively of substantially two-dimensional structural elements, comprising at least a right side (20, 20') and a left side (30, 30'), a back panel (40, 40'), a front panel (60, 60') and an upper cover (50, 50'), each of said sides, panels and cover being bound to a respective adjacent elements in a detachable manner.

2. Box (10') according to claim 1, **characterized in that** it includes at least a further substantially two-dimensional structural element, which is a frame (80') for supporting a bottom of said box where the animals in said box (10') stand and walk.

3. Box according to claim 2, **characterized in that** said front panel comprises a grid (60') inserted by fitting its longitudinal ends into said sides (20', 30').

4. Box (10, 10') according to one of the previous claims, **characterized in that** said right side (20, 20') and left side (30, 30') include respective uprights (21, 22, 31, 32), integral therewith and forming support legs of said box.

5. Box according to one of the previous claims, **characterized in that** said substantially two-dimensional structural elements (20, 20', 30, 30', 40, 40', 50, 50', 60, 60', 80, 80') are bound together by screw means (11, 11').

6. Box according to one of the previous claims, **characterized in that** the right side (20) and left side (30) have on their internal faces, respective shaped protrusions, to which respective support elements (26, 36) of the gridded bedding, are hook fitted.

7. Nursery box (70) designed to be externally bound to a side of a box for rabbit breeding **characterized in that** it comprises a container having the shape substantially of a truncated cone, so that when not used, more nursery boxes can be stacked into one another.

8. Nursery box (70) according to the previous claim, **characterised in that** the four walls (74), (75), (76), (77) adjacent to the open face form an angle greater than 90° with the base (78).

9. Nursery box (70) according to the previous claim, **characterized in that** it is associated to a box for rabbit breeding (10), according to one of claims 1 to 4.
